# EUROPEAN PATENT APPLICATION

(11) **EP 3 261 341 A2**
(43) Date of publication of application: **27.12.2017**
(21) Application number: 17176778.3
(22) Date of filing: 20.06.2017
(51) Int. Cl.: H04N 7/15

(54) **VIDEO IMAGE GENERATION SYSTEM AND VIDEO IMAGE GENERATING METHOD THEREOF**

(30) Priority: 24.06.2016 TW 105120048
(71) Applicant: Pegatron Corporation, Taipei City 112 (TW)
(72) Inventor: FENG, Chen-Yu, 112 Taipei City (TW); LEE, Che-Ming, 112 Taipei City (TW); HUANG, Hsing-Wei, 112 Taipei City (TW)
(74) Representative: Altenburg, Bernardus Stephanus Franciscus

(57) **Abstract**

A video image generation system and a video image generating method thereof are disclosed. The video image generation system includes an image capturing module, an image selection module and a background synthesis module. The image capturing module is used to capture an original image of a scene, wherein the original image has an object. The select the image module is used to find a corresponding selected area image which is having the object from the original image. The background synthesis module is used for combining the selected area image and a background image into a final image.

## Description

### BACKGROUND

### 1. Technology Field

The present disclosure relates to a video image generation system and a video image generating method thereof, particularly to a video image generation system and a video image generating method thereof that can reduce video capacity.

### 2. Description of the Related Art

With the advancement of science and technology, the application of video conferencing through the Internet has become more and more widely. Performing video conferencing should pay attention to the network bandwidth. The transmission environment with lower bandwidth conditions can only be used with lower resolution for video coding, e.g. the resolution decreased from 720p (1080x720) to SD (640x480). In the current internet environment, packet loss or jitter condition is inevitable. It is necessary to endure the shortcomings of poor image performance if the specific bandwidth is not reserved by leasing an expensive line. Therefore, in the prior art, there is already a coding technique based on the H.264 or H.265 standard to achieve the purpose of two-way transmission in a limited bandwidth environment and to maintain a certain quality of the image. However, the new coding technique can reduce the capacity required for the image, but the image coding calculation will increase. For example, the calculation for H.265 or H.264 is 4 times higher than the calculation of the original image coding. In this way, a powerful processor to perform smoothly is needed, but the cost will increase.

Accordingly, it is necessary to devise a new video image generation system and a video image generating method thereof to solve the problem in the prior art.

### Summary

It is a major objective of the present disclosure to provide a video image generation system having the effect of reducing the video capacity.

It is another objective of the present disclosure to provide a video image generating method used in the system described above.

To achieve the objectives described above, a video image generation system in the present disclosure includes an image capturing module, an image selection module, and a background synthesis module. The image capturing module is used to capture an original image of a scene, wherein the original image has an object. The image selection module is electrically connected to the image capturing module for finding a selected area image from the original image having the object. The background synthesis module is electrically connected to the image selection module for combining the selected area image and a background image into a final image.

A video image generating method in the present disclosure includes the following steps: capturing an original image of a scene, wherein the original image has an object; finding a selected area image from the original image having the object; and combining the selected area image and a background image into a final image.

### BRIEF DESCRIPTION OF THE DRAWINGS

FIG. 1 is an architecture diagram of a video image generation system in the present invention;
FIG. 1A shows the appearance of the video image generation system in the present invention;
FIG. 2A is a schematic diagram showing an original image in the present invention;
FIG. 2B is a schematic diagram showing that a selected area image is found according to the present invention;
FIG. 2C is a schematic diagram showing a final image according to a first embodiment of the present invention;
FIG. 2D is a schematic diagram showing a final image according to a second embodiment of the present invention;
FIGS. 3A-3F is a schematic diagram showing a blank image is combined according to an embodiment of the present invention;
FIG. 4 is a flowchart showing steps of a video image generating method according to the first embodiment of the present invention; and
FIG. 5 is a flowchart showing steps of a video image generating method according to the second embodiment of the present invention.

### DETAILED DESCRIPTION OF THE PREFERRED EMBODIMENT

Hereafter, the technical content of the present invention will be better understood with reference to preferred embodiments.

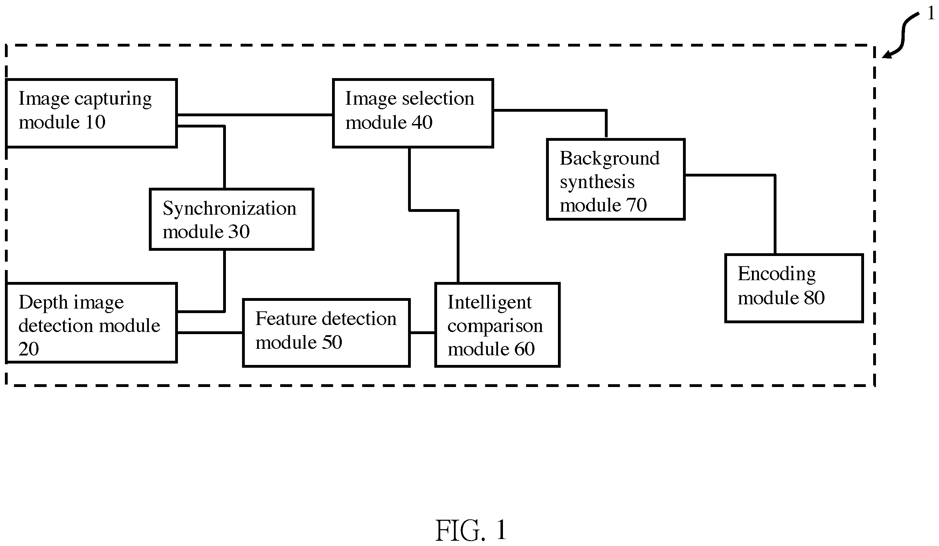

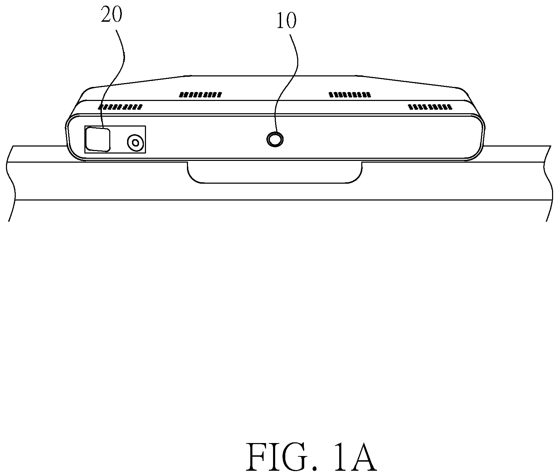

Hereafter please first refer to FIG. 1 which is an architecture diagram of a video image generation system in the present invention, and FIG. 1A which shows the appearance of the video image generation system in the present invention.

A video image generation system 1 of the present invention can be used for a video conferencing system to generate an image to be transferred to a distant place. The video image generation system 1 may comprise an image capturing module 10, a depth image detection module 20, a synchronization module 30, an image selection module 40, a feature detection module 50, a background synthesis module 70, an encoding module 80, and an intelligent comparison module 60, but the present invention is not limited to the above modules. The video image generation system 1 is not limited to include all of the above modules to achieve the effect of the present invention. The image capturing module 10 is used to capture a scene to obtain an original image, wherein the original image has an object. The object may be a human body or a thing, but the present invention is not limited thereto. The original image may be a color image, but the present invention is not limited thereto. The image selection module 40 is electrically connected to image capturing module 10 for finding a selected area image having the object from the original image, for example, using color matching to find the object, but the present invention is not limited thereto. The background synthesis module 70 is electrically connected to the image selection module 40 for combining the selected area image and a background image into a final image.

In an embodiment of the present invention, the video image generation system 1 may comprise a depth image detection module 20 to detect the user to get the human body depth image information. The depth image detection module 20 may be using a Dual Camera technology, a Structured Lighting scan technology or a Time-of-Flight scan technology to get a different kind of performance of the depth of the image, but the present invention is not limited to the technology listed above. The appearance of the video image generation system 1 can be as shown in FIG. 1A, wherein the image capturing module 10 and the depth image detection module 20 are side by side in the same direction for capturing. Also, the capture angle of the image capturing module 10 and detection angle of the depth image detection module 20 have been calibrated so that the original image and the depth image information can be aligned.

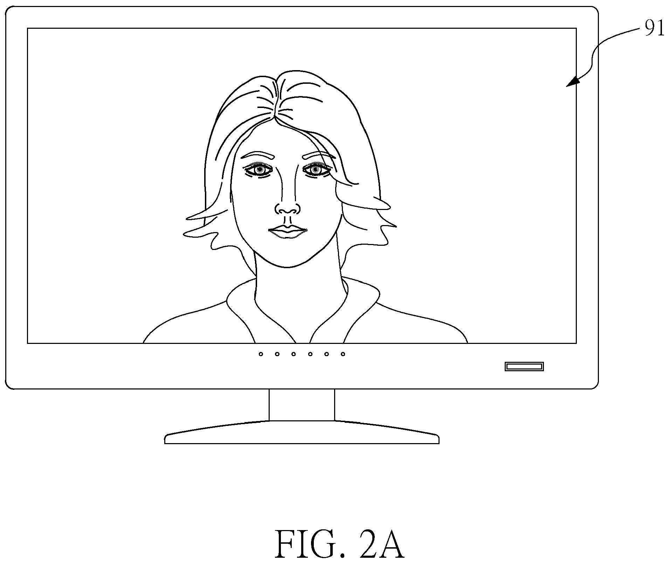

Then, please refer to FIG. 2A, which is a schematic diagram showing an original image in the present invention.

Fist, the image capturing module 10 directly captures an original image 91 of a first user. The original image 91 will include the first user's image and the background behind the screen. At the same time, the depth image detection module 20 will detect the same first user to get the depth image information. Also, the synchronization module 30 of the video image generation system 1 is electrically connected to the image capturing module 10 and the depth image detection module 20 for executing a time axis synchronization of the original image and the depth image information to avoid time inconsistency between the original image and the depth image information.

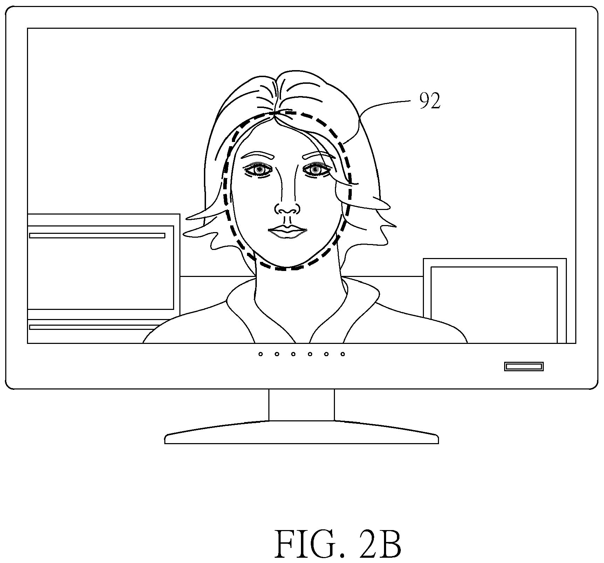

Then, the image selection module 40 finds a corresponding selected area image 92 from the original image according to the depth image information, as shown in FIG. 2B which is a schematic view showing a selected area image is found according to the present invention.

In an embodiment of the present invention, the video image generation system 1 may include a feature detection module 50 which is electrically connected to the depth image detection module 20. The feature detection module 50 is used to detect a user's face image information or a body image information in the depth image information, such that the image selection module 40 compares the original image according to the face image information or the body image information to obtain the corresponding selected area image 92. As shown in FIG. 2B, the feature detection module 50 can first find the first user's face image, and then the image selection module 40 will circle select a part of the face image as the selected area image 92.

It should be noted that in order to determine that the depth image information obtained by the depth image detection module 20 is really the information of the participants, the video image generation system 1 may include an intelligent comparison module 60 which is electrically connected to the feature detection module 50 for further determining whether the face image information or the body image information is still within a specific area and exceed a specific time; if yes, the image selection module 40 gets the corresponding selected area image 92 according to the face image information or the body image information.

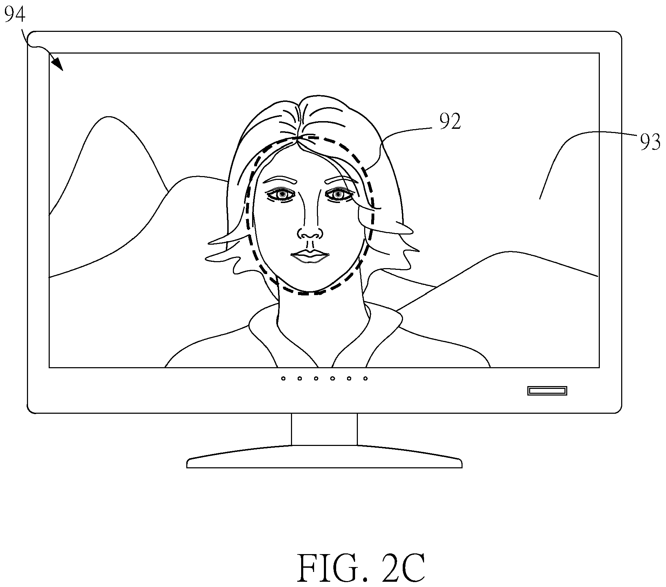

The background synthesis module 70 is used to combine each frame of the selected area image 92 and a background image 93 into a final image 94, as shown in FIG. 2C. FIG. 2C is a schematic diagram showing a final image according to a first embodiment of the present invention.

The background image 93 may be a still image. For example, the background synthesis module 70 sets the image other than the selected area image 92 in the original image 91 as the still image. If the selected area image 92 only includes a user's face image information, the background synthesis module 70 sets the image other than the user's face in the original image 91 as the still image. If the selected area image 92 includes the user's body image information, the background synthesis module 70 sets the image other than the user's body in the original image 91 as the still image. In another embodiment of the present invention, the background synthesis module 70 can also be used for the first user to select a scene, such as an office scene or an outdoor scene, to set the image as the still image. As a result, the background synthesis module 70 combines the selected area image 92 of each frame and the background image 93 of the still image, and finally into a complete dynamic final image 94. Additionally, in another embodiment of the present invention, the background image 93 may also be a dynamic image, but the present invention is not limited thereto.

The video image generation system 1 further includes an encoding module 80, which is electrically connected to the background synthesis module 70 for converting the final image 94 into an image format, e.g. the H.264 or H.265 standard encoding format, but the present invention is not limited thereto. As a result, the final image 94 includes a continuous-action selected area image 92 and a still image type background image 93. The H.264 or H.265 standard encoding format can be used to compare the changes between before and after frame to find the same area, and only process in the area of changes. In this way, the encoding module 80 can reduce the required size of the still image type of the background image 93, and only process the continuous-action selected area image 92 in the final image 94. As a result, during the user is communicating, the video image generation system 1 can significantly reduce the required transmission bandwidth for transmitting the continuous final image 94.

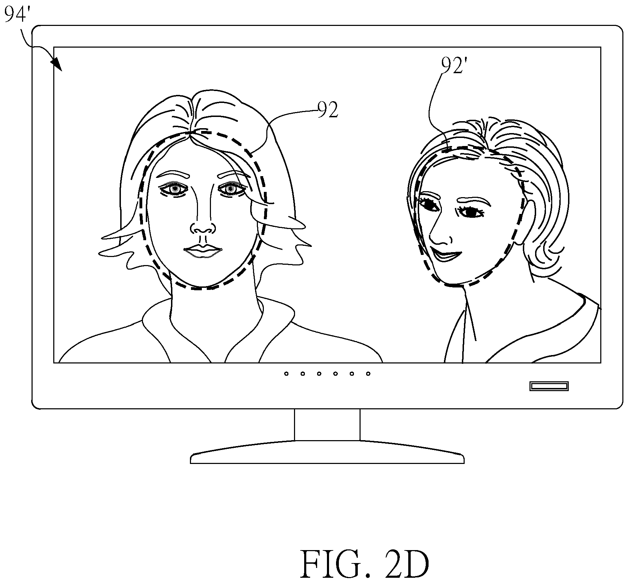

Then, please refer to FIG. 2D which is a schematic view showing a final image according to a second embodiment of the present invention.

The video image generation system 1 in the present invention is not limited to a single user. If the depth image detection module 20 detects the depth image information of a second user, the intelligent comparison module 60 can also determine whether the second user's depth image information is still within a new specific area and exceeds a specific time, i.e. through detection of the feature detection module 50 about the second user's face image information or body image information to determine whether the second user is still within a new specific area and exceeds a specific time, to infer whether the second user is a meeting participant. If the second user's depth image information does not persist within the new specific area and exceeds the certain time, it means that the second user may only pass through instead of the conference participant. Therefore, when the intelligent comparison module 60 determines that the second user is also a meeting participant, the intelligent comparison module 60 further compares the second user's the face image information or body image information according to the new depth image information to get a newly selected area image 92'. At last, the background synthesis module 70 combines the first user's selected area image 92, the second user's newly selected area image 92' and the background image into the final image 94'. As described above, the video image generation system 1 in the present invention is not limited to a single user, but is applicable to two or more users.

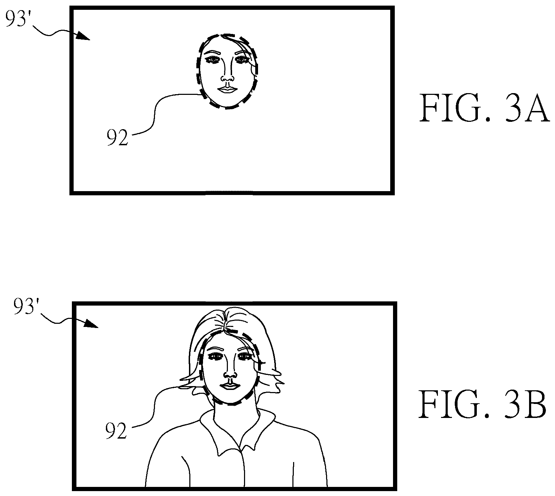

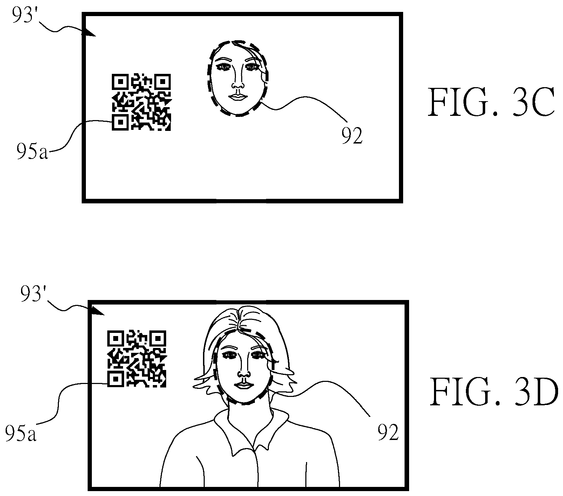

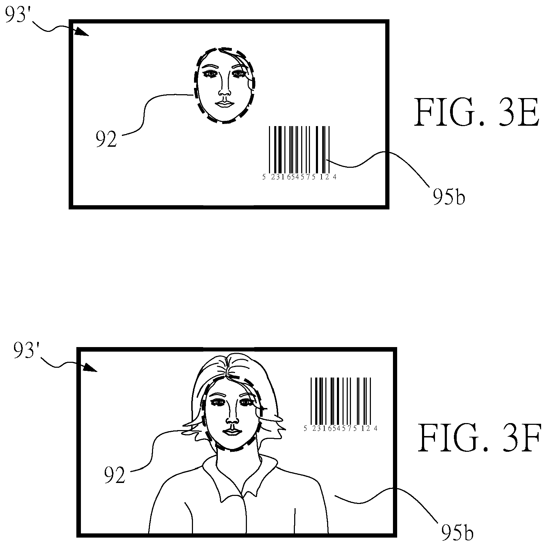

Then, please refer to FIGS. 3A-3F which are schematic diagrams are showing a blank image is combined according to an embodiment of the present invention.

The background image 93 may be a blank image 93'. After the image selection module 40 gets the selected area image 92, the background synthesis module 70 can combine the selected area image 92 and the blank image 93'. That is, the background synthesis module 70 can combine the selected area image 92 of the face image information and the blank image 93' (as shown in FIG. 3A) or the selected area image 92 having the body image information and the blank image 93' (as shown in FIG. 3B), i.e. similar to the background erase effect.

Additionally, to allow bilateral users to know the background used by each other, the background synthesis module 70 adds a message that needs to be notified to another user in the part of blank image 93, e.g. notify the other background image 93 may be the original scene, or a certain background. As shown in FIGS. 3C-3D, the background synthesis module 70 may further add barcode 95a which is QR Code, such that another user can read it through a device. Or as shown in FIGS. 3E-3F, the background synthesis module 70 may add one-dimensional barcode 95b, but the present invention is not limited thereto.

It should be noted that each module of the video image generation system 1 may be configured as a hardware device, software program with hardware device, or firmware with hardware device, e.g. an application stored in a computer readable media. Also, each module may be configured in the same device or different devices. For example, the image capturing module 10 and the depth image detection module 20 can be configured in the same capture device, while the other modules are set in the computer system, but the present invention is not limited to the way described above. In addition, the preferred embodiments of the present invention are only illustrative. To avoid redundancy, all the possible combinations of changes are not documented in detail. However, it shall be understood by those skilled in the art that each of the modules or elements described above may not be necessary. For the implementation of the present invention, the present invention may also contain other detailed, conventional modules or elements. Each module or component is likely to be omitted or modified depending on the needs. Other modules or elements may not necessarily exist between two of any modules.

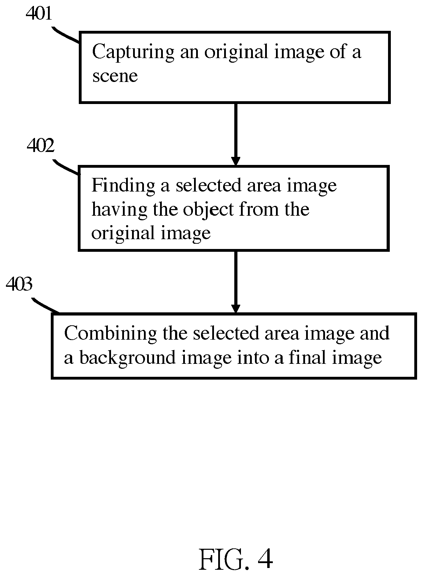

Then, please refer to FIG. 4 which is a flowchart showing steps of a video image generating method according to the first embodiment of the present invention. It should be noted here that although the video image generation method described above is exemplified by the video image generation system 1 described above, the video image generating method in the present invention is not limited to the video image generation system 1 using the same structure as described above.

First, in Step 401: Capturing an original image of a scene.

First, the image capturing module 10 is used for capturing a scene to get an original image 91. The original image 91 includes an object which may be a human body or a thing, but the present invention is not limited thereto.

Then, in Step 402: Finding a selected area image having the object from the original image.

Next, the image selection module 40 is used for finding a selected area image 92 having the object from the original image 91, for example, use color matching to find the object, but the present invention is not limited thereto.

Finally, in Step 403: Combining the selected area image and a background image into a final image.

Finally, the background synthesis module 70 first sets a still image as the background image 93, and then combines each frame of the selected area image 92 and the background image 93 into a final image 94. The background image 93 may be a still image or a blank image 93'. The background synthesis module 70 can also further add barcode 95a which is QR Code or one-dimensional barcode 95b, but the present invention is not limited thereto.

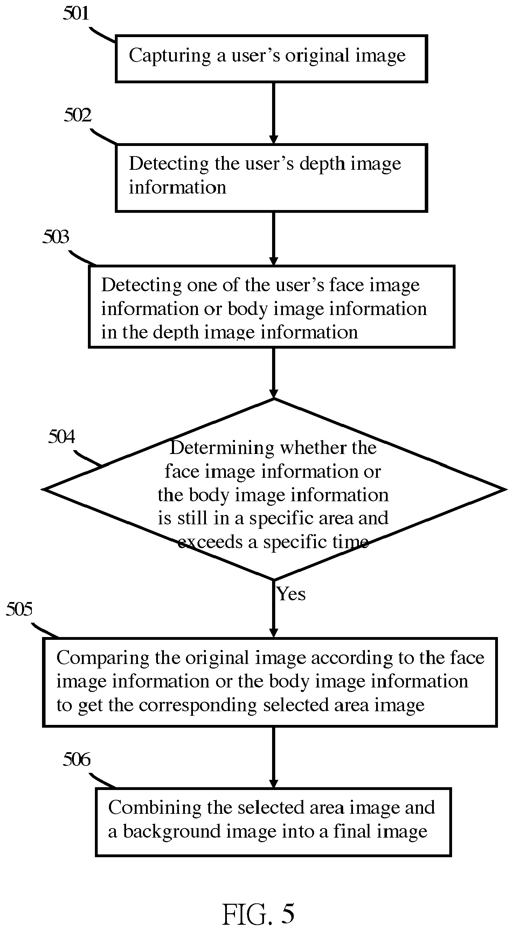

The aforementioned "object" can be used by the participating users, so the present invention can have a second embodiment to achieve better processing results. Then, please refer to FIG. 5 which is a flowchart showing steps of a video image generating method according to a second embodiment of the present invention.

At first, in Step 501: Capturing a user's original image.

First, the image capturing module 10 captures an original image of a scene, wherein the original image includes an object. In an embodiment of the present invention, the image capturing module 10 directly captures a user's original image 91. The original image includes the user's image and the background behind the screen.

Next, if the video image generation system 1 has captured the user's image, proceed with Step 502: Detecting the user's depth image information.

Next, the depth image detection module 20 will detect the same user to get the depth image information.

Then, in Step 503: Detecting one of the user's face image information or body image information in the depth image information.

Then, the feature detection module 50 is used to detect one of the user's face image information or body image information in the depth image information.

Then, in Step 504: Determining whether the face image information or the body image information is still in a specific area and exceeds a specific time.

The intelligent comparison module 60 further determines whether the face image information or the body image information is still in a specific area and exceeds a specific time.

If yes, then in Step 505: Comparing the original image according to the face image information or the body image information to get the corresponding selected area image.

The image selection module 40 compares the original image according to the face image information or the body image information to get the corresponding selected area image 92. It should be noted that the video image generation system 1 in the present invention is not limited to being applied to a single user, but can be applied to two or more users. That is, in Step 501 to Step 505, the intelligent comparison module 60 can also determine whether the two or more users' face image information or body image information is still in a specific area and exceeds a specific time to find the selected area image 92 and the newly selected area image 92' at the same time.

Then, in Step 506: Combining the selected area image and a background image into a final image.

Same with Step 403, the background synthesis module 70 first sets a still image as the background image 93, and then combines each frame of the selected area image 92 and the background image 93 into a final image 94. The background synthesis module 70 can also combine the selected area image 92 and the blank image 93', or further include the barcode 95a or barcode 95b.

It should be noted here that, the video image generating method in the present invention is not limited to the order of the above steps, and the order of the above steps can be changed as long as the objectives of the present invention are achieved.

Through the video image generation system 1 and the video image generating method in the present invention, all the background images 93 in the final image 94 are the same; therefore, after the encoding module 80 is used with the H.264 or H.265 standard coding technology for processing, the video required bandwidth can be effectively reduced.

It should be noted that the preferred embodiments of the present invention described above are only illustrative. To avoid redundancy, all the possible combinations of changes are not documented in detail. However, it shall be understood by those skilled in the art that each of the modules or elements described above may not be necessary. For the implementation of the present invention, the present invention may also contain other detailed, conventional modules or elements. Each module or component is likely to be omitted or modified depending on the needs. Other modules or elements may not necessarily exist between two of any modules. All without departing from the scope of the invention are defined solely by the appended claims.

## Claims

1. A video image generation system (1), comprising:
an image capturing module, for capturing an original image (91) of a scene, wherein the original image (91) has an object;
an image selection module, electrically connected to the image capturing module (10) for finding a selected area image (92) having the object from the original image; and
a background synthesis module, electrically connected to the image selection module (40) for combining the selected area image (92) and a background image (93) into a final image (94).

2. The video image generation system (1) as claimed in claim 1, further comprising a depth image detection module (20) for obtaining a depth image information of the scene, such that the image selection module (40) finds the selected area image (92) having the object from the original image (91) according to the depth image information.

3. The video image generation system (1) as claimed in claim 2, wherein a detection angle of the depth image detection module (20) and a capture angle of the image capturing module (10) are calibrated first.

4. The video image generation system (1) as claimed in claim 2 or 3, further comprising a synchronization module (30) which is electrically connected to the image capturing module (10) and the depth image detection module (20) for performing a time axis synchronization for the original image (91) and the depth image information.

5. The video image generation system (1) as claimed in one of claims 2 to 4, further comprising a feature detection module (50) which is electrically connected to the depth image detection module (20) for detecting a face image information or a body image information of a first user from the depth image information, such that the image selection module (40) compares the original image (91) according to the face image information or the body image information to obtain the corresponding selected area image.

6. The video image generation system (1) as claimed in claim 5, further comprising a comparison module which is electrically connected to the feature detection module, wherein the comparison module further determines whether the face image information or the body image information is still within a specific area and exceeds a specific time;
if yes, the image selection module (40) obtains the corresponding selected area image (92) according to the face image information or the body image information.

7. The video image generation system (1) as claimed in claim 6, wherein if the depth image detection module (20) detects a new depth image information of a second user, the intelligent comparison module (60) determines whether the new depth image information of the second user is still within a new specific range and exceeds the specific time; if yes, the intelligent comparison module (60) further obtains a newly selected area image (92') according to the new depth image information of the second user.

8. The video image generation system (1) as claimed in one of claims 1 to 7, further comprising an encoding module (80) which is electrically connected to the background synthesis module (70) for performing a video format conversion to the final image (94).

9. The video image generation system (1) as claimed in one of claims 1 to 8, wherein the background synthesis module (70) sets an image in the original image (91) other than the selected area image (92) to the background image (93).

10. A video image generating method, which is used in a video image generation system (1) for generating a transmit video image; the method comprising:
capturing a original image (91) of a scene, wherein the original image (91) has an object;
finding a selected area image (92) having the object from the original image; and
combining the selected area image (92) and a background image (93) into a final image (94).

11. The video image generating method as claimed in claim 10, further comprising the following steps:
obtaining a depth image information of the scene to find the selected area image (92) having the object from the original image (91) according to the depth image information.

12. The video image generating method as claimed in claim 11, further comprising the following steps:
calibrating a capture direction of the captured original image (91) of a scene and getting a detection direction of the depth image information of the scene.

13. The video image generating method as claimed in claim 11 or 12, further comprising the step of performing a time axis synchronization for the original image (91) and the depth image information.

14. The video image generating method as claimed in one of claims 11 to 13, further comprising the following steps:
detecting a face image information or a body image information of a first user in the depth image information; and
comparing the original image (91) according to the face image information or the body image information to obtain the corresponding selected area image.

15. The video image generating method as claimed in claim 14, further comprising the following steps:
further determining whether the face image information or the body image information are still within a specific range and exceeds a specific time; and
if yes, obtaining the corresponding selected area image (92) according to the face image information or the body image information.

16. The video image generating method as claimed in claim 15, further comprising the following steps:
if a new depth image information of a second user, is detected, determining whether the second user's new depth image information is still within a new specific area and exceeds the specific time; and
if yes, further obtaining a newly selected area image (92') according to the new depth image information of the second user.

17. The video image generating method as claimed in one of claims 10 to 16, further comprising the step of setting an image in the original image (91) other than the selected area image (92) to the background image.
